# EUROPEAN PATENT SPECIFICATION

(11) **EP 3 902 402 B1**
(45) Date of publication and mention of the grant of the patent: **18.09.2024**
(21) Application number: 19904597.2
(22) Date of filing: 17.12.2019
(51) Int. Cl.: A23C 3/02, A23C 3/04, A23L 3/005, A23C 3/033, A23L 2/46, A23L 2/48, A23L 3/00, A23L 3/18

(54) **A STERILIZATION-PASTEURIZATION DEVICE**
STERILISIERUNGS-PASTEURISIERUNGSVORRICHTUNG
SYSTÈME DE STÉRILISATION-PASTEURISATION

(30) Priority: 27.12.2018 TR 201820645
(43) Date of publication of application: 03.11.2021
(73) Proprietor: Celal Bayar Universitesi Teknoloji Gelistirme Bolgesi A. S., 45040 Manisa (TR)
(72) Inventor: YILMAZ, Tuncay, Manisa (TR); CIVI, Can, Yunusemre/Manisa (TR); BASARAN, Anil, Yunusemre/Manisa (TR)
(74) Representative: Kaya, Erdem
(86) International application number: PCT/TR2019/051092
(87) International publication number: WO 2020/139254

(56) References cited:
- EP-A1- 1 475 000
- EP-B1- 1 328 167
- CN-A- 109 042 875
- US-A- 4 476 146
- US-A- 4 479 423
- US-A- 4 479 423
- US-A1- 2004 005 242
- US-A1- 2015 096 322
- YILMAZ, T.: "Induction Assisted Pasteurization of Honey", INTERNATIONAL JOURNAL OF ENERGY APPLICATIONS AND TECHNOLOGIES, July 2018 (2018-07-01), At Barcelona- Spain, pages 39 - 43, XP055736458, DOI: 10.31593/ijeat.467186

## Description

### TECHNICAL FIELD

The present invention relates to a sterilization-pasteurization device for sterilizing/pasteurizing a fluid and having at least one heating chamber where the fluid flows through at least one flow line by passing through at least one fluid inlet, at least one heater for increasing the heat of the fluid in said heating chamber, at least one cooling chamber whereto the fluid flows for absorption of the heat thereof after the fluid passes through the heating chamber, at least one fluid outlet where the fluid flows by passing to said cooling chamber.

### PRIOR ART

Foods are substances which may easily deteriorate because of the rich nutrient ingredients thereof and which must therefore be preserved. For instance, the most basic method of presenting of a food like milk to the consumers in a healthy manner is to apply thermal process. Thus, microorganisms, which lead to deterioration and diseases, can be removed. The thermal processes applied to foods are essentially separated into two processes, namely, it is defined as pasteurization when the applied temperature is lower than 100°C and it is defined as sterilization when the applied temperature is higher than 100°C.

EP1475000 discloses a simplified multipurpose pasteurizer, comprising: at least one tank (11), containing a mixture or product to be treated; and respective heating and cooling circuits, said pasteurizer being characterized in that said at least one tank (11) has a first opening (12) for the outlet of the mixture or product to be treated to a pipe (13), which is connected, in turn, to a second opening (15) for reentry into said tank (11), said pipe (13) set outside the tank (11) being connected to a first circuit for heating (16, 17, 18) and to a second circuit for cooling (20, 21, 22, 23, 24) via an exchanger (14, 30) and an evaporator (19, 30).

In the present systems used in pasteurization or sterilization of foods comprising liquid in fluid form or particles with high consistency, heat transfer to the good is provided for instance by means of multi-part heat exchangers with plates, pipes, body-pipes. In the heat exchangers of the present systems, foods are brought to pasteurization or sterilization temperature directly or indirectly by using agent fluids like hot water or vapor. At the desired temperature, in order to provide the determined duration, it is waited in a pipe with determined length and afterwards, it is rapidly cooled. In this method already used, auxiliary plants are needed for producing agent fluids like hot water and/or vapor, cold water. Depending on the process, energy consuming equipment like pumps, electrical heaters, boilers, cooling systems are used in these plants. This leads to increase of the energy consumption of the system. In other words, the fluid requirement of the high temperature agent used in food heating step and obtaining the cooling water in the cooling step increase both the installment and the operational costs. The safety risks, which occur in the heating step as a result of usage of gases which are harmful and/or poisonous to the environment during cooling by means of the agent fluid which is at high temperature and pressure, are among the disadvantages of present systems.

This increases work safety risks in the medium where the systems are used. Besides, pasteurization and sterilization processes require high level of hygiene. In the present systems, pluralities of equipment, used for agent fluid production in both heating and cooling, make difficult providing of the hygiene, and sanitary costs increase. Moreover, in the present systems, high temperature and pressured agent fluid used in the heating part must be cooled after usage because of environmental pollution risk. This is a factor increasing operational costs. In addition, in the present system, fossil fuel is used for vapor production and the gases, which occur as a result of burning, lead to air pollution. Particularly in order to prevent air pollution which may occur as a result of usage of solid fuel, the funnel gas filtering systems, which shall be set up, lead to additional cost.

As a result, because of all of the abovementioned problems, an improvement is required in the related technical field.

### BRIEF DESCRIPTION OF THE INVENTION

The present invention relates to a sterilization-pasteurization device for sterilizing/pasteurizing a fluid, for eliminating the above mentioned disadvantages and for bringing new advantages to the related technical field.

An object of the present invention is to provide sterilizing/pasteurizing with low energy loss of the fluid.

In order to realize the abovementioned objects and the objects which are to be deducted from the detailed description below, the present invention is at least one sterilization-pasteurization device for sterilizing/pasteurizing a fluid and having at least one heating chamber where the fluid flows through at least one flow line by passing through at least one fluid inlet, at least one heater for increasing the heat of the fluid in said heating chamber, at least one cooling chamber whereto the fluid flows for absorption of the heat thereof after the fluid passes through the heating chamber, at least one fluid outlet where the fluid flows by passing to said cooling chamber. Accordingly, the subject matter sterilization-pasteurization device comprises at least one condenser for increasing the heat of the fluid in the heating chamber in said flow line, at least one evaporator for absorbing the heat of the fluid in the cooling chamber, at least one throttle valve for keeping the pressure of the cooling fluid in the desired interval between said evaporator and said condenser, at least one cooling line connecting said throttle valve, the evaporator and the condenser in between, at least one compressor for providing circulation of the cooling fluid in said cooling line and at least one pre-heating chamber. Thus, the fluid is heated and cooled by means of phase changes which occur depending on the operation principles of the cooling circuit.

According to the invention, the condenser for providing heating of the fluid, is positioned in the heating chamber. Thus, the microorganisms in the fluid are removed by means of the heat emitted by the condenser.

In a possible embodiment of the present invention, at least one heater, which operates by means of electrical power optionally, is provided in the heating chamber. Thus, heating is provided in cases where the heat, obtained from the condenser, is not sufficient for heating the fluid.

In a possible embodiment of the present invention, at least one heat-meter is provided for providing detection of temperature in the flow line. Thus, the heat changes in the flow line can be monitored by the control unit.

In a possible embodiment of the present invention, at least one control unit is provided which detects the temperature of the fluid by means of said heat-meter and which can operate the heater optionally. Thus, the condition where the heat of the condenser is not sufficient is detected and the heater is operated by the control unit. The invention is defined by the appended set of claims.

### BRIEF DESCRIPTION OF THE FIGURES

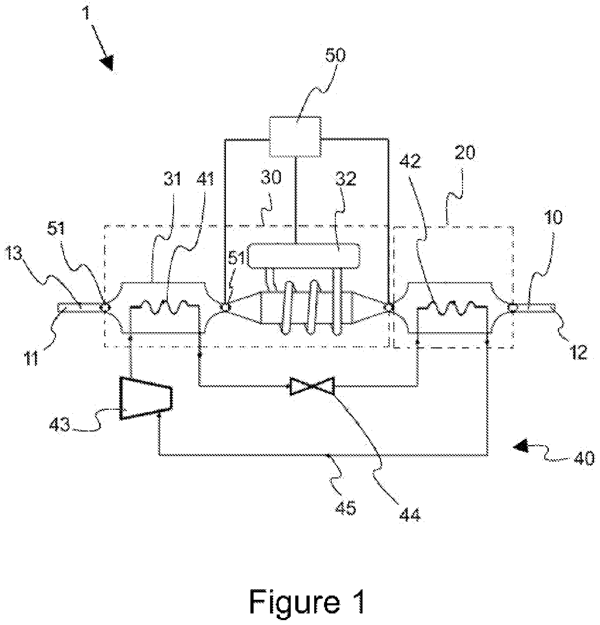

Figure 1 is a representative schematic view of the subject matter sterilization-pasteurization device.

### DETAILED DESCRIPTION OF THE INVENTION

In this detailed description, the subject matter sterilization-pasteurization device (1) is explained with references to examples without forming any restrictive effect only in order to make the subject more understandable.

In Figure 1, a representative schematic view of the subject matter laser sterilization-pasteurization device (1) is given. Said sterilization-pasteurization device (1) comprises at least one heating chamber (30) and at least one cooling chamber (20) for sterilizing/pasteurizing a fluid (13) in at least one flow line (10). There is at least one heater (32) in said heating chamber (30). In a preferred embodiment of the present invention, the heater (32) can be an induction coil or it can be heat source like resistance, etc. Moreover, in a possible embodiment of the present invention, at least one pre-heating chamber (31) is positioned in the heating chamber (30).

The sterilization-pasteurization device (1) has at least one cooling circuit (40). In said cooling circuit (40), a cooling fluid makes circulation in at least one cooling line (45). In the cooling circuit (40), at least one compressor (43) compresses the cooling fluid and increases the pressure and temperature thereof. Said compressor (43) is connected to at least one condenser (41) by means of said cooling line (45). Said condenser (41) is positioned in said pre-heating chamber (31). The condenser (41) heats the pre-heating chamber (31) by giving the heat of the cooling fluid. The condenser (41) is connected to at least one throttle valve (44) by means of the cooling line (45). In said throttle valve (44), the pressure of the cooling fluid is decreased, and depending on this, the temperature of the cooling fluid is decreased. The throttle valve (44) is connected by means of the cooling line (45) to at least one evaporator (42). Said evaporator (42) is positioned in said cooling chamber (20). The evaporator (42) absorbs the heat in the cooling chamber (20) by means of the cooling fluid whose pressure and temperature are low. The evaporator (42) is connected to the compressor (43) by means of the cooling line (45). By means of this, the cooling circuit (40) is in repetitive flow.

Moreover, in the subject matter sterilization-pasteurization device (1), at least one heat-meter (51) is positioned. In a possible embodiment of the present invention, said heat-meter (51) is positioned at specific intervals along the flow line (10). The heat-meter (51) is connected to at least one control unit (50). Said control unit (50) operates the heater (32) depending on the data received from the heat-meter (51).

In more details, in order to provide sterilization/pasteurization of the fluid (13), the fluid (13) enters through at least one fluid inlet (11) in the flow line (10) and passes to the heating chamber (30) and passes to the cooling chamber (20) after the heating chamber (30) and exits at least one fluid outlet (12) after the cooling chamber (20). When the fluid (13) enters into the heating chamber (30), it is heated by a condenser (41) in a pre-heating chamber (31). If the temperature of the fluid (13) in the heating chamber (30) is not sufficient, this is detected by the heat-meter (51) and this is notified to the control unit (50). In this case, the control unit (50) re-heats the fluid (13) in the heating chamber (30) by means of the heater (32). Afterwards, the fluid (13) flows to the cooling chamber (20). The evaporator (42) is positioned for providing cooling of the fluid (13) in the cooling chamber (20). The fluid (13) cooled by the evaporator (42) advances through the fluid oulet (12). In a possible embodiment of the present invention, in the flow line (10), at least one stirrer can be used particularly for advancing of fluids (13) with dense consistence.

Thus, in the sterilization-pasteurization device (1), a hybrid heating is provided by means of the heat energy obtained from the cooling circuit (40) and by means of the heat energy received from the heater (32). The sterilization-pasteurization device (1) makes the pasteurization and sterilization processes of the fluid (13) environment-friendly, hygienic, low energy consuming and thus more cost-effective. Besides, electrical power, which is more reachable, more sustainable and cleaner, is used in a safe manner in the sterilization and pasteurization processes of liquid foods.

The protection scope of the present invention is set forth in the annexed claims and cannot be restricted to the illustrative disclosures given above, under the detailed description. It is because a person skilled in the relevant art can obviously produce similar embodiments under the light of the foregoing disclosures, without departing from the main principles of the present invention.

### REFERENCE NUMBERS

- 1: Sterilization-Pasteurization Device
10 Flow Line
11 Fluid Inlet
12 Fluid Outlet
13 Fluid
20 Cooling Chamber
30 Heating Chamber
31 Pre-Heating Chamber
32 Heater
40 Cooling Circuit
41 Condenser
42 Evaporator
43 Compressor
44 Throttle Valve
45 Cooling Line
50 Control Unit
51 Heat-meter

## Claims

1. At least one sterilization-pasteurization device (1) for sterilizing/pasteurizing a fluid (13) and having at least one heating chamber (30) where the fluid (13) flows through at least one flow line (10) by passing through at least one fluid inlet (11), at least one heater (32) for increasing the heat of the fluid (13) in said heating chamber (30), at least one cooling chamber (20) whereto the fluid (13) flows for absorption of the heat thereof after the fluid (13) passes through the heating chamber (30), at least one fluid outlet (12) where the fluid (13) flows by passing to said cooling chamber (20), **wherein** the subject matter sterilization-pasteurization device (1) comprises at least one condenser (41) for increasing the heat of the fluid (13) in the heating chamber (30) in said flow line (10), at least one evaporator (42) for absorbing the heat of the fluid (13) in the cooling chamber (20), at least one throttle valve (44) for keeping the pressure of the cooling fluid in the desired interval between said evaporator (42) and said condenser (41), at least one cooling line (45) connecting said throttle valve (44), the evaporator (42) and the condenser (41) in between, at least one compressor (43) for providing circulation of the cooling fluid in said cooling line (45) and at least one pre-heating chamber (31), wherein the condenser (41) is positioned in the heating chamber (30) to provide heat to the fluid (13).

2. A sterilization-pasteurization device (1) according to claim 1, **wherein** at least one heater (32), which operates by means of electrical power optionally, is provided in the heating chamber (30).

3. A sterilization-pasteurization device (1) according to claim 1, **wherein** at least one heat-meter (51) is provided for providing detection of temperature in the flow line (10).

4. A sterilization-pasteurization device (1) according to claim 1 or 3, **wherein** at least one control unit (50) is provided which detects the temperature of the fluid (13) by means of said heat-meter (51) and which can operate the heater (32) optionally.

## Patentansprüche

1. Mindestens eine Sterilisations-/Pasteurisationsvorrichtung (1) zum Sterilisieren/Pasteurisieren eines Fluids (13), die mindestens eine Heizkammer (30), in die das Fluid (13) durch mindestens eine Strömungsleitung (10) strömt, indem es durch mindestens einen Fluideinlass (11) strömt, mindestens einen Heizer (32) zum Erhöhen der Wärme des Fluids (13) in der Heizkammer (30), mindestens eine Kühlkammer (20), in die das Fluid (13) strömt, um seine Wärme zu absorbieren, nachdem das Fluid (13) die Heizkammer (30) passiert hat, mindestens einen Fluidauslass (12) aufweist, in den das Fluid (13) strömt, indem es in die Kühlkammer (20) gelangt, **wobei** Sterilisations-/Pasteurisationsvorrichtung (1) mindestens einen Kondensator (41) zur Erhöhung der Wärme des Fluids (13) in der Heizkammer (30) in der Strömungsleitung (10), mindestens einen Verdampfer (42) zum Absorbieren der Wärme des Fluids (13) in der Kühlkammer (20), mindestens ein Drosselventil (44) zum Halten des Drucks des Kühlfluids in dem gewünschten Intervall zwischen dem Verdampfer (42) und dem Kondensator (41), mindestens eine Kühlleitung (45), die das Drosselventil (44), den Verdampfer (42) und den Kondensator (41) dazwischen verbindet, mindestens einen Kompressor (43) zum Bereitstellen einer Zirkulation des Kühlfluids in der Kühlleitung (45) und mindestens eine Vorheizkammer (31), umfasst, wobei der Kondensator (41) in der Heizkammer (30) angeordnet ist, um dem Fluid (13) Wärme zuzuführen.

2. Sterilisations-/Pasteurisationsvorrichtung (1) nach Anspruch 1, **wobei** in der Heizkammer (30) mindestens ein Heizer (32) vorgesehen ist, der wahlweise mittels elektrischer Energie betrieben wird.

3. Sterilisations-/Pasteurisationsvorrichtung (1) nach Anspruch 1, **wobei** mindestens ein Wärmemengenzähler (51) zur Erfassung der Temperatur in der Strömungsleitung (10) vorgesehen ist.

4. Sterilisations-/Pasteurisierungsvorrichtung (1) nach Anspruch 1 oder 3, **wobei** mindestens eine Steuereinheit (50) vorgesehen ist, die die Temperatur des Fluids (13) mittels des Wärmemengenzählers (51) erfasst und den Heizer (32) optional betreiben kann.

## Revendications

1. Au moins un dispositif de stérilisation-pasteurisation (1) pour stériliser/pasteuriser un fluide (13) et comportant au moins une chambre de chauffage (30) où le fluide (13) s'écoule à travers au moins une ligne d'écoulement (10) en passant par au moins une entrée de fluide (11), au moins un réchauffeur (32) pour augmenter la chaleur du fluide (13) dans ladite chambre de chauffage (30), u moins une chambre de refroidissement (20) vers laquelle s'écoule le fluide (13) pour absorber sa chaleur après que le fluide (13) ait traversé la chambre de chauffage (30), où moins une sortie de fluide (12) où le fluide (13) s'écoule en passant vers ladite chambre de refroidissement (20), **dans lequel** le dispositif de stérilisation-pasteurisation (1) en question comprend au moins un condenseur (41) pour augmenter la chaleur du fluide (13) dans la chambre de chauffage (30) dans ladite ligne d'écoulement (10), au moins un évaporateur (42) pour absorber la chaleur du fluide (13) dans la chambre de refroidissement (20), au moins un valve de régulation (44) pour maintenir la pression du fluide de refroidissement dans l'intervalle souhaité entre ledit évaporateur (42) et ledit condenseur (41), au moins une ligne de refroidissement (45) reliant ledit valve de régulation (44), l'évaporateur (42) et le condenseur (41) entre eux, au moins un compresseur (43) pour assurer la circulation du fluide de refroidissement dans ladite ligne de refroidissement (45) et au moins une chambre de préchauffage (31), dans lequel le condenseur (41) est positionné dans la chambre de chauffage (30) pour fournir de la chaleur au fluide (13).

2. Dispositif de stérilisation-pasteurisation (1) selon la revendication 1, **dans lequel** au moins un réchauffeur (32), qui fonctionne éventuellement au moyen d'énergie électrique, est prévu dans la chambre de chauffage (30).

3. Dispositif de stérilisation-pasteurisation (1) selon la revendication 1, **dans lequel** au moins un compteur thermique (51) est prévu pour fournir une détection de la température dans la ligne d'écoulement (10).

4. Dispositif de stérilisation-pasteurisation (1) selon la revendication 1 ou 3, **dans lequel** au moins une unité de commande (50), qui détecte la température du fluide (13) au moyen dudit compteur thermique (51) et qui peut éventuellement fonctionner le réchauffeur (32) est prévue.
